# EUROPEAN PATENT SPECIFICATION

(11) **EP 3 532 735 B1**
(45) Date of publication and mention of the grant of the patent: **11.01.2023**
(21) Application number: 17921483.8
(22) Date of filing: 26.10.2017
(51) Int. Cl.: F16B 2/00, F16B 21/00, F16B 21/06, F16B 21/08, F16B 2/22, F16B 21/07

(54) **A CONNECTION MEMBER**
VERBINDUNGSELEMENT
ÉLÉMENT DE RACCORDEMENT

(30) Priority: 26.10.2016 TR 201615266
(43) Date of publication of application: 04.09.2019
(73) Proprietor: Ford Otomotiv Sanayi Anonim Sirketi, Istanbul (TR)
(72) Inventor: OZTURK, Gokmen, Istanbul (TR); PEKCAKAR, Erkan, Istanbul (TR); META, Burak, Istanbul (TR); SEZGINER, Emine Zuhre, 34885 Sancaktepe Istanbul (TR)
(74) Representative: Dericioglu, E. Korhan
(86) International application number: PCT/TR2017/050523
(87) International publication number: WO 2019/035787

(56) References cited:
- EP-A1- 1 291 534
- EP-A1- 2 722 534
- WO-A1-2011/089650
- WO-A1-2012/092473
- JP-A- 2001 289 217
- JP-U- S5 884 411
- US-A1- 2005 155 191
- US-A1- 2015 211 565

## Description

### Technical Field

The present invention relates to a connection member which connects structural elements or machine parts to each other and which is fixed in the receiving groove.

### Prior Art

Connection members are used in many places and fields for different purposes in the present day. These connection members can be of very different geometric shapes and technical features. Clips can be shown as examples for connection members. The said clips enable one or more parts to remain together where they are assembled together, by connecting them to each other. However, if it is preferred to disassemble these interconnecting parts, this clip must be dismantled first. The said clip may undergo severe deformation during the disassembly phase and become unusable.

US2005079009 (A1) United States patent document, in the state of the art, discloses a clip design. In this design, there are clip surfaces passing towards the back of the connection through the gap in the parts to be connected, and the clip head pressing on the surface of the parts. Comparing the document in the state of the art and the invention of the application, it is seen similar due to features of the clip having flexible flaps, the placement of the clipping settlement and the pressing head which presses on the surface. However, the characteristics of the interface acting as a spring on the inner surface of the clip and not being opened without the apparatus are the characteristics that crete difference together with the new design. In the clip design described in the document in the state of the art, there are no interfacing and retaining claws that prevent unintentional movement.

United States patent document US2003000048 (A1), which is known in the art, discloses a connection clip design. In the said design, there are side surfaces which are opened to the rear of the connection surface and are clamped to the connection edge. The head of the clip presses against the surface and provides the connection. When the document in the state of the art is compared with the invention of the application, there are similarities in terms of the design of the clip pressing head which provides lateral press and the pushing head of the clip. However, the design in the reference document differs from the document in the state of the art, in terms of use of the apparatus, and the part that acts as a spring in the clip. The invention of the application has a part serving as a spring. The said connection member does not move from the surface that it is placed on, without having an assembly/disassembly element with its interface. The stationary position of the connection member is supported by the retaining claws. None of these features that are included in the application are included in the document in the state of the art.

United States patent document US2012308333 (A1), which is known in the art, discloses a connection member. In the design shown in the said document, the claws were left on the part of the clip which creates lateral pressure, which was pushed towards the surfaces to be attached by being pressed from the head part. When the document known in the state of the art and the invention of the application are compared, they have similarities due to the clawed side connection surfaces and the head connecting point. However, usage with apparatus and the inner surface acting as a spring are seen as a difference from the document known in the state of the art. The connection member in the document of the application has an interface. The interface prevents the connection member from being demounted without an apparatus. There is no such feature in the state of the art. In addition, the connection member in the invention of the application has mounting surfaces that can be produced at different angles, an intermediate piece that acts as a spring, and an interface that prevents unintentional movement. Said parts do not take place in the document in the state of the art.

New Zealand patent document NZ560892 (A) known in the state of the art discloses a connection member. In the said design, there are flaps that are inserted by flexing into the connection area and they can be removed without being deformed. When the document in the state of the art is compared to the invention of the application, there is no similarities except for the features of resilient flaps and that it is removed without deformation. The connection member in the document of the application provides the joining of superimposed parts. The said connection member has an interface which holds the two surfaces and prevents unintentional movement. The interface prevents disassembly without apparatus. In addition, there are retaining claws on the surface of the connection member contacting the assembled parts. By this way, disassembly is prevented. Additionally, the connection member has mounting surfaces that can be produced in different angles. Considering all the features, the invention of the application is completely different from the invention disclosed in the document in the state of the art.

The connection members used in the prior art have threads which provide locking. In the case of preferring disengagement of the connection member, the user forces the connection member, and as a result, the threads are broken. The connection member is displaced from its position by means of the deformation thereon. If the deformed connection element is to be reused, the previous mounting quality can not be achieved. Deformation in the connection member both shortens the service life and decreases the quality of the next assembly.

In the state of the art, there is a connection member which allows superimposed parts to be assembled, does not disassemble without a mounting apparatus thereby eliminating the possibility of deformation, and does not move unintentionally.

Another connection member is known from JP S58 84411 U.

### Objects of the Invention

The object of the invention is to provide a connection member wherein service life is increased by minimizing deformation.

Another object of this invention is to provide a connection member, which can be demounted only by authorized people and which cannot be demounted from its position in the contrary case.

A further object of this invention is to provide a connection member, which brings cost saving and prevents loss in the quality of the next mounting by increasing the service life.

### Brief Description of the Invention

A connection member according to the first claim and its dependent claims is provided in order to fulfil the objects of this invention and is mounted and demounted by means of an apparatus. The apparatus contacts the intermediate member by passing through the connection member and is pushed forward until the intermediate member is folded. After the apparatus is locked to the connection member, the connection member is inserted into the preferred aperture. After the connection member is placed into the aperture, it is pulled backwards and the connection member is fixed by releasing it in the aperture. When it is preferred to demount the connection member, the same process is repeated and the connection member is disassembled from the work piece.

### Detailed Description of the Invention

The connection member provided to fulfill the object of this invention is illustrated in the accompanying figures, wherein;

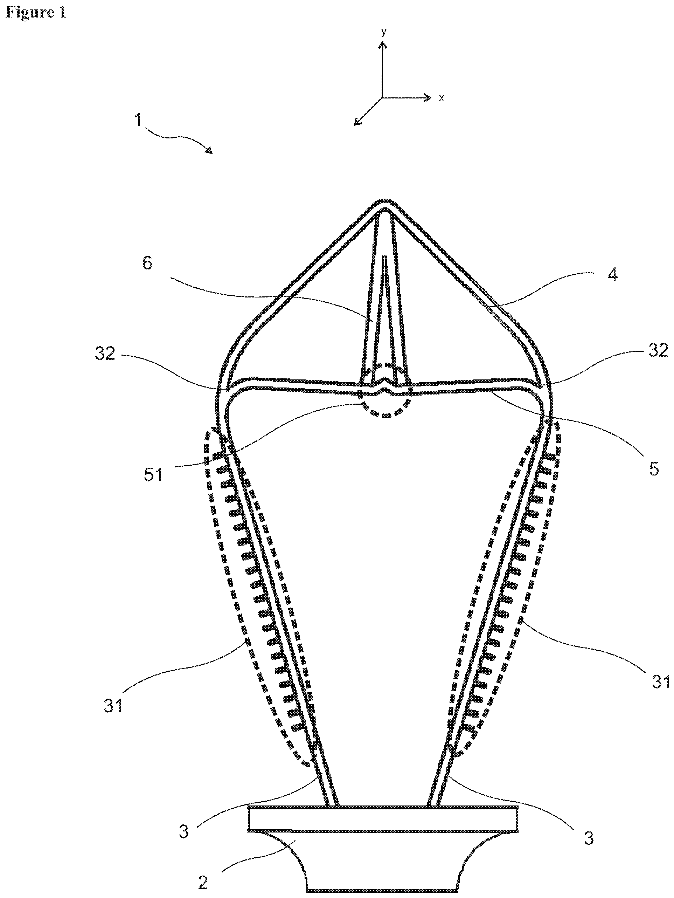

- **Figure 1.**: Pre-view of the connection member.

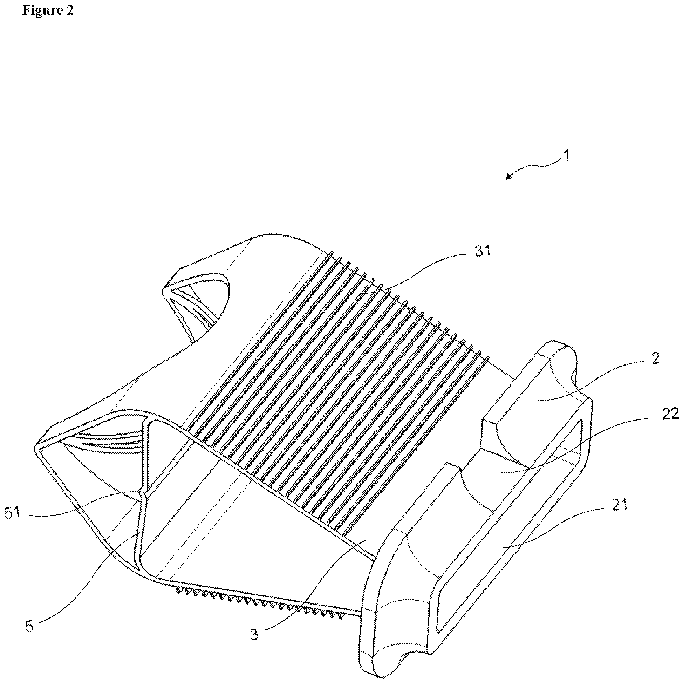

- **Figure 2.**: Perspective view of the connecting view from an angle.
- **Figure 3.**: Perspective view of the connection member from an angle, when there is a mounting apparatus attached.
- **Figure 4.**: Blown-up perspective view of the connection member srewed by an apparatus, in its screwed state.

The parts in the figures are numbered one by one and the reference numbers are given below.
**1.** Connection member
**2.** Body
   **21.** Recess
   **22.** Slot
**3.** Retaining surface
   **31.** Rib
   **32.** Connection point
**4.** Pre-contact member
**5.** Intermediate member
   **51.** Protrusion
**6.** Flexible member
**A.** Apparatus
**T.** Retainer

Connection member (1) which connects structural elements and machine parts to each other and is fixed into the receiving groove essentially comprises
- at least one body (2) in which the apparatus (A) is placed,
- at least one retaining surface (3) which creates friction on walls of the aperture on the work piece and provides fixation by the ribs (31) thereon,
- two pre-contact members (4) which facilitate entry into the aperture on the work piece and centres the aperture,
- at least one intermediate member (5) foldable during assembly and disassembly, which urges the pre-contact members (4) to move in the +x and -x directions and approach each other in the undesired interactions,
- at least one flexible member (6) providing release after mounting into the aperture is complete.

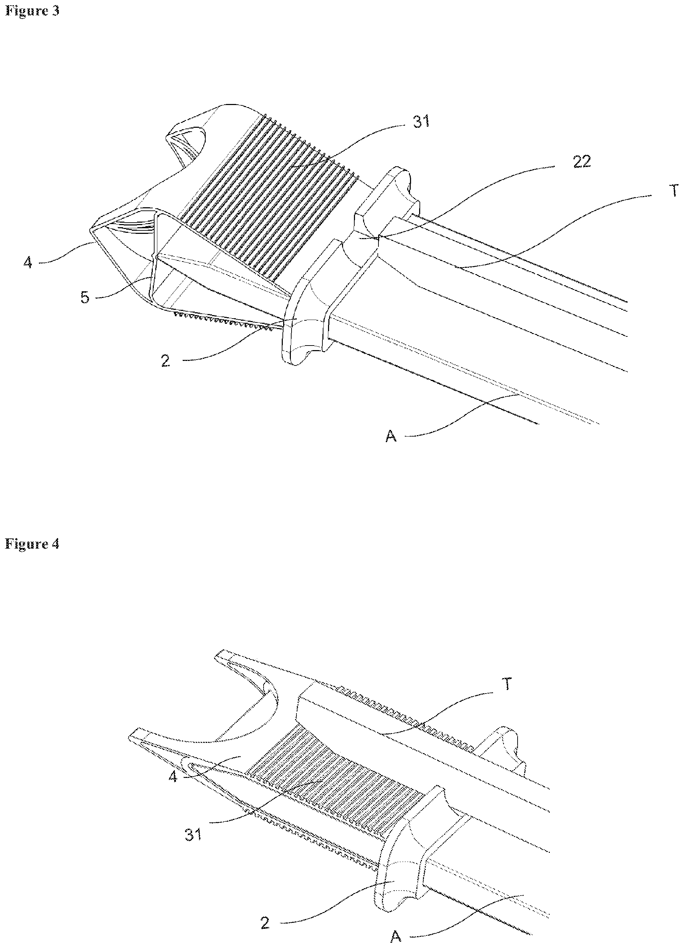

According to the invention, there is a body (2). The body (2) is the element that the apparatus (A) passes through. At the same time, the body (2) ensures that the connection member (1) and the element to be connected are not separated from each other after the fixing operation is completed and prevents the displacement from the aperture in the workpiece. In the center of the body (2) there is a recess (21). The apparatus (A) is placed on the body (2) passing through this recess (21) (Figure 3). The body (2) has two slots (22) parallel to each other. The slot (22) is the area where the retainers (T) of the apparatus (A) are placed on the body 2 (Figure 4).

According to the invention, there is a retaining surface (3). The retaining surface (3) provides contact with the aperture in which the connection member (1) will be seated. There are ribs (31) on the retaining surfaces (3). The ribs (31) allow the connection member (1) to be retained in the part to be locked and prevent undesired movements. The retaining surfaces (3) are positioned opposite to each other, preferably forming a bottom-cut truncated "V" shape. Each of the retaining surfaces (3) makes a wide angle with the horizontal plane. The angle of the retaining surfaces (3) with the horizontal plane can vary. When the retaining surfaces (3) approach each other and become parallel, the angle they make with the surface is 90 degrees. When the angle is 90 degrees, it is easy to perform the process of locating into the apertures on the workpiece.

According to the invention, there is a pre-contact member (4). The pre-contact member (4) is element that first enters the aperture where mounting will be done. According to the invention, there are two pre-contact elements (4) which are opposingly positioned and which are in the form of a continuation of the retaining surfaces (3). The pre-contact elements (4) form an inverted "V" shape geometry. The pre-contact members (4) make a narrow angle with the horizontal plane. The pre-contact members (4) are connected to the retaining surfaces (3) by means of connection points (32).

According to the invention, there is an intermediate member (5). The intermediate member (5) is positioned between the retaining surfaces (3) and the pre-contact members (4), parallel to the horizontal plane. The intermediate member (5) assists the connection member (1) to gain its previous shape after the assembly or disassembly has been carried out. The intermediate member (5) is connected to retaining surfaces (3) and the pre-contact members (4) through the connection points (32). The intermediate member (5) has a protrusion (51) at its midpoint. The protrusion (51) allows the intermediate member (5) to move in the direction of +y or -y with contact of the apparatus (A) during mounting or demounting. The intermediate member (5) has a flexible structure. The angle that the intermediate member (5) makes with the horizontal plane during movement varies between 0-180 degrees. The intermediate member (5) is folded when it is pushed in the +y direction (Figure 3, Figure 4). When the applied force is withdrawn, it returns to its original state. With withdrawal of the apparatus (A), the intermediate member (5) returns to its original state. When the intermediate member (5) is not perturbed, it preferably makes an angle of less than 175 degrees with the horizontal plane. When the intermediate member (5) makes an angle with the horizontal plane, this prevents unintentional movements in the -y direction.

According to the invention, there is a flexible member (6). The flexible member (6) is the element which allows the connecting element (1) to return to its normal state after the assembly or disassembly. In addition, the flexible element (6) acts as a spring and prevents undesired movement of the connection member (1) with the intermediate element (5).

In this embodiment of the invention, the operation of the connection member (1) is carried out as follows:

In case of mounting; an apparatus (A) passes through the recess (21) on the body (2) of the connection member (1). The apparatus (A) passing through the recess (21) is driven until it comes into contact with the protrusion (51) of the intermediate member (5). Then, the retainers (T) of the apparatus (A) are placed in the slots (22) on the body (2) and driven forward. In this case, the angle of the retaining surfaces (3) of the connection member (1) with respect to the horizontal plane is ninety degrees, the angle of the pre-contact elements (4) with the slot has a lower value that that of the released state and the intermediate member (5) is folded in the +y direction. After the connection member (1) is inserted into the aperture on the workpiece, the apparatus (A) is withdrawn. When the contact of the apparatus (A) with the connection member (1) is interrupted, the connection member (1) is released and is tightened into the aperture. The connection member (1) is ensured to remain immovable in the aperture by the the ribs (31) on the retaining surfaces (3), the intermediate member (5) and the protrusion (51) on the intermediate member (5), and the flexible member (6).

In the case of disassembly, a process similar to the assembly process is repeated. The apparatus (A) is placed in the recess (21) on the body (2) of the connection member (1) which is placed in the aperture on the workpiece and it is pushed until by contacting the protrusion (51) of the intermediate member (5) until the angle between the retaining surfaces (3) and the horizontal plane is ninety degrees. When the angle of the retaining surfaces (3) with respect to the horizontal plane is ninety degrees, the retainers (T) of the apparatus (A) are placed into the slots (22) on the body (2). The retainers (T) are locked after they are placed into the slots (22). After the retainers (T) are locked, the apparatus (A) is withdrawn and the connection member (1) removed from the aperture in which it is placed.

By means of the connecting element (1) of the present invention, the problems of breakage and deformation of the threads of the gear structures of the prior art are removed and the service life is increased by removing the possibility of deformation. Increasing the service life of the connection member (1) provides cost savings. Additionally, since the connection member (1) placed on the workpiece is disassembled by means of an apparatus (A) from where it is located, the disassembly operation of the unauthorized persons can not be carried out.

## Claims

1. A connection member (1) which can connect structural elements and machine parts to each other, which can be fixed into a receiving groove and which does not get out without an apparatus (A), comprising
- at least one body (2) in which the apparatus (A) is placeable, which has a recess (21) through which the apparatus (A) can pass and two slots (22) parallel to each other, in which retainers (T) of the apparatus are placeable,
- at least one retaining surface (3) which can create friction on walls of an aperture on a work piece and can provide fixation by ribs (31) thereon, which can provide contact with the aperture on a workpiece, can enable adhesion by creating friction on the aperture walls and includes the ribs (31) preventing undesired movements,
- two pre-contact members (4) which are the elements that first enter the aperture where mounting will be done,
• which are opposingly positioned and which are in the form of a continuation of the retaining surfaces (3), and get connected to the retaining surfaces through the connecting points (32),
• which form an inverted "V" shape geometry and make a narrow angle with the horizontal plane,
• which can facilitate entry into the aperture on the work piece and can centre the aperture,
- at least one intermediate member (5) foldable during assembly and disassembly,
• which urges the pre-contact members (4) to move in the +x and -x directions and approach each other in the undesired interactions,
• which is placed between the retaining surfaces (3) and the pre-contact members (4), located parallel to the horizontal plane, gets folded during assembly and disassembly processes and becomes released by the withdrawal of the apparatus (A),
• the angle of which with respect to the horizontal plane during movement varies between 0-180 degrees,
• which is folded when it is pushed in the +y direction, which returns to its original state when the applied force is withdrawn,
- at least one flexible member (6) providing release after mounting into the aperture is complete.

2. A connection member (1) according to claim 1, **characterized by** the body (2) which prevents displacement from the aperture on the workpiece, after fixation is completed.

3. A connection member (1) according to claim 1, **characterized by** two retaining surfaces (3) which are positioned opposite to each other, preferably forming a bottom-cut truncated "V" shape geometry and each of which makes a wide angle with the horizontal plane.

4. A connection member (1) according to claim 1, **characterized by** the intermediate member (5) which is connected to the retaining surfaces (3) and to the pre-contact members (4) through the connection points (32) and includes a protrusion (51) at its midpoint.

5. A connection member (1) according to claim 4, **characterized by** the protrusion (51) which enables the contact of the apparatus (A) and the movement of the intermediate member (5) in +y or -y direction during assembly and disassembly.

6. A connection member (1) according to claim 1, **characterized by** the intermediate member (5) which preferably makes an angle of less than 175 degrees with the horizontal plane, when it is not perturbed.

7. A connection member (1) according to claim 1, **characterized by** the intermediate member (5) which prevents unintentional movements in the -y direction by making an angle with the horizontal plane.

8. A connection member (1) according to claim 1, **characterized by** the flexible member (6) which enables to return to its normal state after the assembly or disassembly and prevents undesired movements together with the intermediate member (5).

## Patentansprüche

1. Verbindungselement (1), das Bau- und Maschinenteile miteinander verbinden, in einer Aufnahmenut fixiert werden und ohne Einsatz einer Vorrichtung (A) nicht herausgelöst werden kann, **umfassend**
- mindestens ein Gehäuse (2), in dem die Vorrichtung (A) anordenbar ist und weiterhin eine Aussparung (21), durch die die Vorrichtung (A) hindurchgeführt werden kann, und zwei zueinander parallele Schlitze (22), in denen Halterungen (T) der Vorrichtung anordenbar sind, aufweist,
- mindestens eine Haltefläche (3), die eine Reibung an den Wänden einer Öffnung an einem Werkstück erzeugt und eine Fixierung durch die darauf befindliche Rippen (31) bereitstellen kann; die einen Kontakt mit der Öffnung an einem Werkstück bereitstellen und eine Anbindung durch Erzeugung von Reibung an den Öffnungswänden ermöglichen kann und die Rippen (31) umfasst, welche unerwünschte Bewegungen verhindern,
- zwei Vorkontaktelemente (4), bei denen es sich um jene Elemente handelt, die zuerst in die Öffnung eingreifen, in welcher die Montage erfolgen soll, wobei diese
• gegenüberliegend positioniert sind und die Form einer Fortsetzung der Halteflächen (3) aufweisen und über Verbindungsstelle (32) mit den Halteflächen verbunden werden,
• eine verkehrte "V"-Geometrie bilden und einen spitzen Winkel mit der horizontalen Ebene einschließen,
• das Eingreifen in die Öffnung an dem Werkstück erleichtern und die Öffnung zentrieren können,
- mindestens ein bei der Montage und Demontage zusammenklappbares Zwischenelement (5),
• das die Vorkontaktelemente (4) dazu bringt, sich in die Richtungen +x und -x zu bewegen und sich bei unerwünschten Wechselwirkungen einander zu nähern,
• das sich zwischen den Halteflächen (3) und den parallel zur horizontalen Ebene angeordneten Vorkontaktelementen (4) befindet, bei den Montage- und Demontagevorgängen zusammengeklappt wird und durch das Herausziehen der Vorrichtung (A) freigegeben wird,
• deren Winkel gegenüber der Horizontalebene während der Bewegung zwischen 0 und 180 Grad variiert,
• das bei einer Verschiebung in +y-Richtung zusammengeklappt wird und in seinen ursprünglichen Zustand zurückkehrt, wenn die aufgebrachte Kraft aufgehoben wird,
- mindestens ein flexibles Element (6), das nach der Fixierung in der Öffnung für die Freigabe sorgt.

2. Verbindungselement (1) nach Anspruch 1, **gekennzeichnet durch** das Gehäuse (2), das eine Verschiebung aus der Öffnung am Werkstück verhindert, nachdem die Fixierung abgeschlossen ist.

3. Verbindungselement (1) nach Anspruch 1, **gekennzeichnet durch** zwei einander gegenüberliegende Halteflächen (3), die vorzugsweise eine unten abgeschnittene V-förmige Geometrie bilden und jeweils einen stumpfen Winkel mit der Horizontalebene einschließen.

4. Verbindungselement (1) nach Anspruch 1, **gekennzeichnet durch** das Zwischenelement (5), das über die Verbindungsstelle (32) mit den Halteflächen (3) und den Vorkontaktelementen (4) verbunden ist und mittig einen Vorsprung (51) aufweist.

5. Verbindungselement (1) nach Anspruch 4, **gekennzeichnet durch** den Vorsprung (51), der eine Kontaktierung der Vorrichtung (A) und eine Verschiebung des Zwischenelements (5) in +y- oder -y-Richtung während der Montage und Demontage ermöglicht.

6. Verbindungselement (1) nach Anspruch 1, **gekennzeichnet durch** das Zwischenelement (5), das vorzugsweise einen Winkel von weniger als 175 Grad mit der horizontalen Ebene einschließt, wenn es nicht verschoben wird.

7. Verbindungselement (1) nach Anspruch 1, **gekennzeichnet durch** das Zwischenelement (5), das eine unbeabsichtigte Verschiebung in -y-Richtung verhindert, indem es einen Winkel mit der horizontalen Ebene einschließt.

8. Verbindungselement (1) nach Anspruch 1, **gekennzeichnet durch** das flexible Element (6), das es ermöglicht, nach der Montage oder Demontage in seinen normalen Zustand zurückzukehren und zusammen mit dem Zwischenelement (5) unerwünschte Verschiebungen zu verhindern.

## Revendications

1. Un element de connexion (1) qui peut connecter des elements structurels et des pièces de machine entre eux, qui peut être fixé dans la rainure de réception et qui ne sort pas sans appareil (A), **comprenant**
- au moins un corps (2) dans lequel l'appareil (A) peut être placé, qui présente un évidement (21) à travers lequel l'appareil (A) peut passer et deux fentes (22) parallèles l'une à l'autre, dans lesquelles des dispositifs de retenue (T) de l'appareil peuvent être placés,
- au moins une surface de retenue (3) qui crée une friction sur les parois d'une ouverture sur une pièce à usiner et peut assurer une fixation par des nervures (31) sur celle-ci, qui peut assurer un contact avec l'ouverture sur une pièce à usiner, peut permettre une adhésion en créant une friction sur les parois de l'ouverture et comprend les nervures (31) empêchant les mouvements indésirables;
- deux éléments de pré-contact (4) qui sont les éléments qui entrent en premier dans l'ouverture où le montage sera effectué;
• qui sont positionnés de manière opposée et qui sont comme l'extension des surfaces de retenue (3), et sont connectés aux surfaces de retenue par l'intermédiaire des points de connection (32),
• qui forment une géométrie en forme de "V" inversé et crée un angle étroit avec le plan horizontal,
• qui peut faciliter l'entrée dans l'ouverture sur la pièce à usiner et qui peut centrer l'ouverture,
- au moins un élément intermédiaire (5) pliable pendant le montage et le démontage,
• qui pousse les éléments de pré-contact (4) à se déplacer dans les directions +x et -x et à se rapprocher les uns des autres dans les interactions non souhaitées,
• qui est placé entre les surfaces de retenue (3) et les éléments de pré-contact (4), situé parallèlement au plan horizontal, se plie pendant les processus de montage et de démontage et se libère par le retrait de l'appareil (A),
• dont l'angle par rapport au plan horizontal pendant le mouvement varie entre 0 et 180 degrés,
• qui est plié lorsqu'il est poussé dans la direction +y et qui revient à son état initial lorsque la force appliquée est retirée.
- au moins un élément flexible (6) assurant la libération après que le montage dans l'ouverture est terminé.

2. Elément de connexion (1) selon la revendication 1, **caractérisé par** le corps (2) qui empêche le déplacement de l'ouverture sur la pièce, après la terminaison de la fixation.

3. Elément de connexion (1) selon la revendication 1, **caractérisé par** deux surfaces de retenue (3) qui sont positionnées à l'opposé l'une de l'autre, formant de préférence une géométrie en forme de "V" tronqué coupé au fond et dont chacune fait un grand angle avec le plan horizontal.

4. Elément de connexion (1) selon la revendication 1, **caractérisé par** l'élément intermédiaire (5) qui est connecté aux surfaces de retenue (3) et aux éléments de pré-contact (4) par les points de connexion (32) et comprend une saillie (51) à son point central.

5. Elément de connexion (1) selon la revendication 4, **caractérisé par** la saillie (51) qui permet le contact de l'appareil (A) et le mouvement de l'élément intermédiaire (5) dans la direction +y ou -y pendant le montage et le démontage.

6. Elément de connexion (1) selon la revendication 1, **caractérisé par** l'élément intermédiaire (5) qui fait de préférence un angle inférieur à 175 degrés avec le plan horizontal, lorsqu'il n'est pas perturbé.

7. Elément de connexion (1) selon la revendication 1, **caractérisé par** l'élément intermédiaire (5) qui empêche les mouvements involontaires dans la direction -y en faisant un angle avec le plan horizontal.

8. Elément de connexion (1) selon la revendication 1, **caractérisé par** l'élément flexible (6) qui permet de revenir à son état normal après l'assemblage ou le désassemblage et empêche les mouvements indésirables avec l'élément intermédiaire (5).
